# EUROPEAN PATENT APPLICATION

(11) **EP 4 086 925 A1**
(43) Date of publication of application: **09.11.2022**
(21) Application number: 20910886.9
(22) Date of filing: 07.07.2020
(51) Int. Cl.: H01F 1/057

(54) **NEODYMIUM-IRON-BORON PERMANENT MAGNET MATERIAL, PREPARATION METHOD, AND APPLICATION**

(30) Priority: 31.12.2019 CN 201911425194
(71) Applicant: Fujian Changting Golden Dragon Rare-Earth Co., Ltd., Fujian 366300 (CN)
(72) Inventor: MOU, Weiguo, Longyan, Fujian 366300 (CN); XIE, Zhixing, Longyan, Fujian 366300 (CN); HUANG, Jiaying, Xiamen, Fujian 361000 (CN); HUANG, Qingfang, Longyan, Fujian 366300 (CN)
(74) Representative: karo IP
(86) International application number: PCT/CN2020/100578
(87) International publication number: WO 2021/135144

(57) **Abstract**

A neodymium-iron-boron permanent magnet material, a preparation method, and an application. The neodymium permanent magnet material includes R, Al, Cu, and Co; R comprises RL and RH; RL comprises one or many light rare earth elements among Nd, La, Ce, Pr, Pm, Sm, and Eu; RH comprises one or many heavy rare earth elements among Tb, Gd, Dy, Ho, Er, Tm, Yb, Lu, and Sc; the neodymium-iron-boron permanent magnet material satisfies the following relations: (1) B/R: 0.033-0.037; (2) AI/RH: 0.12-2.7. The neodymium-iron-boron permanent magnet material has uniquely advantageous magnetic and mechanical properties, with Br≥13.12 kGs, Hcj≥17.83 kOe, and bending strength≥409 MPa.

## Description

### TECHNICAL FIELD

The present disclosure relates to a neodymium-iron-boron permanent magnet material, preparation method, and use.

### BACKGROUND

Permanent magnet materials have been developed as key materials to support electronic devices, and the development is in the direction of high magnetic energy product and high coercivity. R-T-B series permanent magnet materials (where R is at least one of the rare earth elements and must contain at least one of Nd and PR) are known as magnets with the highest performance among permanent magnets, and are used in various motors and home appliances such as voice coil motors (VCM) for hard disk drives, motors for electric vehicles (EV, HV, PHV etc.) and motors for industrial equipment.

Currently, in the preparation of R-T-B series permanent magnet materials, in order to enhance the coercivity of the permanent magnet materials, the addition of Cu elements to R-T-B series permanent magnet materials can effectively improve the coercivity, but the addition of Cu over 0.35 wt.% will lead to the formation of microcracks after sintering due to the enrichment of Cu at the grain boundary, which reduces the compactness and denseness, and deteriorates the coercivity of the magnets, which further limits the availability of high Cu formulations in R-T-B series permanent magnet materials. Therefore, a formulation for Neodymium-iron-boron permanent magnets is urgently needed to overcome the technical problem of the decrease of magnet strength and coercivity caused by high content of Cu.

### CONTENT OF THE PRESENT INVENTION

The technical problem to be solved in the present disclosure is to provide a neodymium-iron-boron permanent magnet material, preparation method, and use thereof, for overcoming the deficiency of coercivity and mechanical strength reduction caused by high Cu in existing neodymium-iron-boron permanent magnet material.

The present disclosure solves the technical problems described above through the following technical solutions:
The present disclosure provides a neodymium-iron-boron permanent magnet material comprising R, Al, Cu and Co;
R comprises RL and RH;
RL comprises one or more light rare earth elements of Nd, La, Ce, Pr, Pm, Sm and Eu;
RH comprises one or more heavy rare earth elements of Tb, Gd, Dy, Ho, Er, Tm, Yb, Lu and Sc;
the neodymium-iron-boron permanent magnet material satisfies the following relationship:
   (1) B/R:0.033-0.037;
   (2) Al/RH: 0.12-2.7.

In the present disclosure, preferably, RH/R: 0-0.11 and exclusive of 0.

In the present disclosure, preferably, B/R has a weight ratio of 0.034-0.036 or 0.033-0.034, such as 0.0331, 0.033, 0.0339, 0.0332, 0.033 or 0.036.

In the present disclosure, preferably, Al/RH has a weight ratio of 0.35-1.25 or 0.12-2, such as 0.489, 1.9, 1, 0.133, 1.06 or 0.78.

In the present disclosure, RL generally refers to rare earth elements with low atomic number and small mass, also known as light rare earth elements.

In the present disclosure, RL preferably comprises one or more of Nd, Pr and Ce.

In the present disclosure, RH generally refers to rare earth elements with high atomic number and large mass, also known as heavy rare earth elements.

In the present disclosure, RH preferably comprises Dy and/or Tb.

In the present disclosure, preferably, the neodymium-iron-boron permanent magnet material comprises a NdFeB main phase and an intergranular rare earth rich phase, the intergranular rare earth rich phase comprises RHₓ-Al_{y}-RL_{z}-Cuₘ-Coₙ phase, x is 0.4-5.0, y is 0.5-1.1, z is 45-92, m is 0.5-3.5, n is 1.5-7; for example Tb_{3.7}-Al_{0.51}-Nd_{89.5}-Cu_{1.2}-Co_{4.6}, Tb_{2.4}-Al_{1.04}-Nd_{90.2}-Cu_{1.5}-Co_{5.6}, Tb_{0.4}Dy_{2.5}-Al_{0.59}-Nd_{89.6}-Cu_{1.4}-Co_{5.1}, Tb_{4.5}-Al_{0.68}-Nd_{90.4}-Cu_{1.3}-Co_{5.2}, Tb_{3.1}-Al_{0.98}-Nd_{67.3}Pr_{22.7}-Cu_{1.3}-Co_{5.1} or Tb_{3.8}-Al_{0.77}-Nd_{89.2}-Cu_{1.2}-Co_{5.0}. Herein, the intergranular rare earth rich phase is also known as grain boundary phase.

In the present disclosure, preferably, the volume ratio of the RHₓ-Al_{y}-RL_{z}-Cuₘ-Coₙ phase to the intergranular rare earth rich phase is 4-10%, more preferably 4.5-6%, such as 5.8%, 5.6%, 4.5%, 5.4%, 5.5% or 5.6%.

The present disclosure further provides a neodymium-iron-boron permanent magnet material, wherein the neodymium-iron-boron permanent magnet material comprises a NdFeB main phase and an intergranular rare earth rich phase, the intergranular rare earth rich phase comprises RHₓ-Al_{y}-RL_{z}-Cuₘ-Coₙ phase, x is 0.4-5.0, y is 0.5-1.1, z is 45-92, m is 0.5-3.5, n is 1.5-7; RL and RH have features as described above.

In the present disclosure, the intergranular rare earth rich phase may be Tb_{3.7}-Al_{0.51}-Nd_{89.5}-Cu_{1.2}-Co_{4.6}, Tb_{2.4}-Al_{1.04}-Nd_{90.2}-Cu_{1.5}-Co_{5.6}, Tb_{0.4}Dy_{2.5}-Al_{0.59}-Nd_{89.6}-Cu_{1.4}-Co_{5.1}, Tb_{4.5}-Al_{0.68}-Nd_{90.4}-Cu_{1.3}-Co_{5.2}, Tb_{3.1}-Al_{0.98}-Nd_{67.3} Pr_{22.7}-Cu_{1.3}-Co_{5.1} or Tb_{3.8}-Al_{0.77}-Nd_{89.2}-Cu_{1.2}-Co_{5.0}.

In the present disclosure, preferably, the volume ratio of the RHₓ-Al_{y}-RL_{z}-Cuₘ-Coₙ phase to the intergranular rare earth rich phase is 4-10%, more preferably 4.5-6%, such as 5.8%, 5.6%, 4.5%, 5.4%, 5.5% or 5.6%.

In the present disclosure, the components and contents of the neodymium-iron-boron permanent magnet material may be conventional in the art. Preferably, the neodymium-iron-boron permanent magnet material comprises, by mass percentage,
R: 28-33 wt.%;
RH: 0.5 -2.5 wt.%;
Cu: 0.35-0.55 wt.%;
Al: 0.44-0.95 wt.%;
Co: 0.85-1.5 wt.%;
B: 0.955-1.05 wt.%;
Fe: 66-69 wt.%;
R comprises RL and RH;
RL and RH have features as described above;
wt.% refers to the mass percentage relative to the neodymium-iron-boron permanent magnet material.

In the present disclosure, R preferably has a range of content of 28-31 wt.% or 29-33 wt.%, such as 29 wt.%, 31.8 wt.%, 29.5 wt.%, 31 wt.%, 31.5 wt.% or 29.2 wt.%, wt.% refers to the mass percentage relative to the neodymium-iron-boron permanent magnet material.

In the present disclosure, RH preferably has a range of content of 0.5-1.5 wt.% or 0.9-2.5 wt.%, such as 0.9 wt.%, 0.5 wt.%, 1.5 wt.% or 0.8 wt.%, wt.% refers to the mass percentage relative to the neodymium-iron-boron permanent magnet material.

In the present disclosure, Cu preferably has a range of content of 0.35-0.5 wt.% or 0.4-0.55 wt.%, such as 0.35 wt.%, 0.55 wt.%, 0.4 wt.%, 0.45 wt.%, 0.5 wt.% or 0.42 wt.%, wt.% refers to the mass percentage relative to the neodymium-iron-boron permanent magnet material.

In the present disclosure, Al preferably has a range of content of 0.44-0.85 wt.% or 0.5-0.95 wt.%, such as 0.44 wt.%, 0.95 wt.%, 0.5 wt.%, 0.85 wt.% or 0.7 wt.%, wt.% refers to the mass percentage relative to the neodymium-iron-boron permanent magnet material.

In the present disclosure, Co preferably has a range of content of 0.85-1.3 wt.% or 0.95-1.5 wt.%, such as 0.85 wt.%, 1.5 wt.%, 0.9 wt.%, 0.95 wt.%, 1.2 wt.% or 1.3 wt.%, wt.% refers to the mass percentage relative to the neodymium-iron-boron permanent magnet material.

In the present disclosure, B preferably has a range of content of 0.955-1.03 wt.% or 1-1.05 wt.%, such as 0.96 wt.%, 1.05 wt.%, 1 wt.%, 1.03 wt.% or 1.04 wt.%, wt.% refers to the mass percentage relative to the neodymium-iron-boron permanent magnet material.

In the present disclosure, the neodymium-iron-boron permanent magnet material may further comprise M, which comprises one or more of Nb, Zr, Ti and Hf.

M may have a range of content of 0.1-0.4 wt.%, preferably, 0.15-0.25 wt.%, wt.% refers to the mass percentage relative to the neodymium-iron-boron permanent magnet material.
when the M comprises Nb, Nb preferably has a range of content of 0-0.5 wt.%, such as 0.2 wt.%, 0.21 wt.%, 0.23 or 0.25 wt.%, wt.% refers to the mass percentage relative to the neodymium-iron-boron permanent magnet material;
when the M comprises Zr, Zr preferably has a range of content of 0-0.3 wt.%, such as 0.2 wt.%, wt.% refers to the mass percentage relative to the neodymium-iron-boron permanent magnet material;
when the M comprises Ti, Ti preferably has a range of content of 0-0.3 wt.%, such as 0.21 wt.%, wt.% refers to the mass percentage relative to the neodymium-iron-boron permanent magnet material.

Preferably, the RH/R: 0- 0.11 and exclusive of 0.

In a preferred embodiment of the present disclosure, the neodymium-iron-boron permanent magnet material comprises, by mass percentage, R: 28-31 wt.%; RH: 0.5-1.5 wt.%; Cu: 0.35-0.5 wt.%; Al: 0.44-0.85 wt.%; Co: 0.85-1.3 wt.%; B: 0.955-1.03 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, R: 29-33 wt.%; RH: 0.9-2.5 wt.%; Cu: 0.4-0.55 wt.%; Al: 0.5-0.95 wt.%; Co: 0.95-1.5 wt.%; B: 1-1.05 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, R: 28-31 wt.%; RH: 0.5-1.5 wt.%; Cu: 0.4-0.55 wt.%; Al: 0.5-0.95 wt.%; Co: 0.95-1.5 wt.%; B: 1-1.05 wt.%; Nb: 0-0.5 wt.%, Zr: 0-0.3 wt.%, Ti: 0-0.3wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, Nd: 28.1 wt.%; Tb: 0.9 wt.%; Cu: 0.35 wt.%; Al: 0.44 wt.%; Co: 0.85 wt.%; B: 0.96 wt.%; Nb: 0.2 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, Nd: 31.3 wt.%; Tb: 0.5 wt.%; Cu: 0.55 wt.%; Al: 0.95 wt.%; Co: 1.5 wt.%; B: 1.05 wt.%; Zr: 0.2 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, Nd: 29 wt.%; Tb: 0.1 wt.%; Dy: 0.4; Cu: 0.4 wt.%; Al: 0.5 wt.%; Co: 0.9 wt.%; B: 1 wt.%; Nb: 0.25 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, Nd: 29.5 wt.%; Tb: 1.5 wt.%; Cu: 0.45 wt.%; Al: 0.52 wt.%; Co: 0.95 wt.%; B: 1.03 wt.%; Ti: 0.21 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, PrNd: 30.7 wt.%; Tb: 0.8 wt.%; Cu: 0.5 wt.%; Al: 0.85 wt.%; Co: 1.2 wt.%; B: 1.04 wt.%; Nb: 0.21 wt.%; wt.% refers to the mass percentage relative to the neodymium-iron-boron permanent magnet material; the balance is Fe and inevitable impurities.

In a preferred embodiment of the present disclosure, the neodymium-iron-boron permanent magnet material comprises, by mass percentage, Nd: 28.3 wt.%; Tb: 0.9 wt.%; Cu: 0.42 wt.%; Al: 0.7 wt.%; Co: 1.3 wt.%; B: 1.05 wt.%; Nb: 0.23 wt.%; wt.% refers to the mass percentage relative to the neodymium-iron-boron permanent magnet material; the balance is Fe and inevitable impurities.

The present disclosure further provides a preparation method for a neodymium-iron-boron permanent magnet material, comprising the following steps: subjecting a melt of a raw material composition for the neodymium-iron-boron permanent magnet material to casting, coarse crushing, pulverization, forming and sintering;
the raw material composition for the neodymium-iron-boron permanent magnet material comprises R, Al, Cu and Co;
R comprises RL and RH; RL has features as described above; RH has features as described above;
the raw material composition for the neodymium-iron-boron permanent magnet material satisfies the following relationship:
   (3) B/R: 0.033-0.037.
   (4) Al/RH: 0.12-2.7.

In the present disclosure, the components and contents in the raw material composition of the neodymium-iron-boron permanent magnet material may be conventional in the art.

Preferably, the raw material composition of the neodymium-iron-boron permanent magnet material comprises, by mass percentage, R: 28-33 wt.%; RH: 0.5-2.5 wt.%; Cu: 0.35-0.55 wt.%; Al: 0.44-0.95 wt.%; Co: 0.85-1.5 wt.%; B: 0.955-1.05 wt.%; and the balance is Fe and inevitable impurities;

R comprises RL and RH; wt.% refers to the mass percentage relative to the raw material composition for the neodymium-iron-boron permanent magnet material.

In the present disclosure, the melt of the raw material composition for the neodymium-iron-boron permanent magnet material may be prepared according to the conventional method in the art, such as melting in a high-frequency vacuum induction smelting furnace. The vacuum degree of the smelting furnace may be 5×10⁻² Pa. The melting may have a temperature of below 1550°C.

In the present disclosure, the process of the casting comprises pour-casting, the pour-casting may have a temperature of 1420-1460°C, preferably 1425-1455°C, such as 1430°C.

Casting is carried out after the pour-casting. The casting method may be: in Ar gas atmosphere (e.g. 5.5×10⁴Pa Ar gas atmosphere), cooling at the rate of 10² to 10⁴°C/sec.

An alloy sheet is obtained after the casting, the alloy sheet may have a thickness of conventional in the art, preferably 0.28-0.32 mm, such as 0.3 mm.

In the present disclosure, the crushing process may be conventional crushing process in the art, such as hydrogen absorption, dehydrogenation and cooling treatment.

In the present disclosure, the hydrogen absorption may be carried out under the condition of hydrogen pressure of 0.085 MPa.

In the present disclosure, the dehydrogenation may be carried out under the condition of evacuation while heating, and the dehydrogenation has a temperature of 480-520°C, such as 500°C.

In the present disclosure, the pulverization process may be a conventional pulverization process in the art, such as jet mill pulverization.

In the present disclosure, preferably, the pulverization process is carried out in an atmosphere with oxidizing gas content of 100 ppm or less. The oxidizing gas refers to oxygen or moisture content.

In the present disclosure, pressure in a pulverization chamber for the jet mill pulverization may be 0.68MPa. A powder crushed by the jet mill pulverization may have particle size of 4.1-4.4 µm; preferably 4.1-4.3 µm; for example 4.2 µm.

After the crushing, a lubricant, such as zinc stearate, may be added according to conventional means in the art. The addition amount of the lubricant may be 0.05-0.15%, such as 0.12%, relative to the weight of the powder after mixing.

In the present disclosure, the forming process may be a conventional forming process in the art, such as magnetic field forming method.

In the present disclosure, the sintering process may be a conventional sintering process in the art, for example, sintering, and cooling under vacuum conditions (e.g. 5×10⁻³ Pa vacuum).

In the present disclosure, the sintering may have temperature of the conventional sintering temperature in the art, such as 1000-1100°C, and then 1070°C. The sintering may have time of conventional sintering time in the art, such as 6h. Before the cooling, Ar gas may be introduced to make the air pressure reach 0.05Mpa.

In the present disclosure, the sintering may also further follow by an aging treatment.

In the present disclosure, the aging treatment may have temperature of 490-530°C, preferably 500-520°C, such as 510°C. The aging treatment may have time of 2.5-4 hours, such as 3h.

The present disclosure also provides a neodymium-iron-boron permanent magnet material prepared by the above method.

The present disclosure also provides a use of a neodymium-iron-boron permanent magnet material as an electronic component in an electric device.

In the present disclosure, the electronic component may be a rotor magnetic material of electric device.

On basis of conforming to common knowledge in the art, the above-mentioned preferred conditions may be arbitrarily combined to obtain various preferred embodiments of the present disclosure.

The reagents and raw materials used in the present disclosure are all commercially available.

The positive progressive effects of the present disclosure lie in:
1) the neodymium-iron-boron permanent magnet material of the present disclosure has an excellent magnetic performance: Br≥13.12kGs, Hcj≥17.83kOe, BHmax≥41.38MGOe;
2) the neodymium-iron-boron permanent magnet material of the present disclosure has an excellent mechanical performance: bending strength≥409MPa, and the coercivity and mechanical strength can be maintained at a high level at the same time.

### BRIEF DESCRIPTION OF THE DRAWINGS

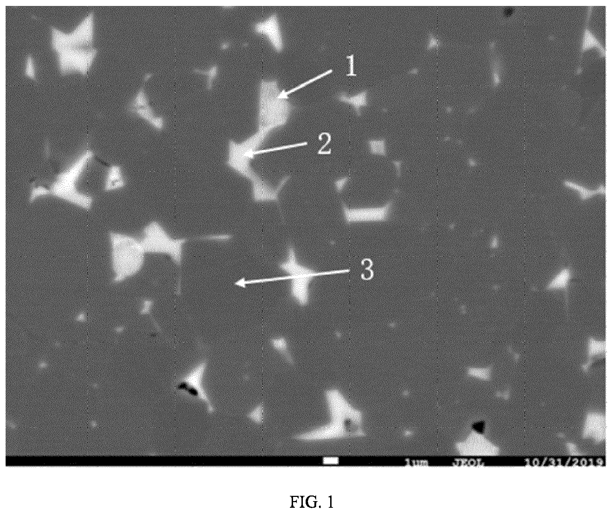

FIG. 1 is the SEM spectrum of the neodymium-iron-boron permanent magnet material in Example 1, wherein, point 3 is the Nd₂Fe₁₄B main phase (gray area), point 2 is the grain boundary phase (silver-white area), and point 3 is the RHₓ-Al_{y}-RL_{z}-Cuₘ-Coₙ phase (gray-white mass) comprised in the grain boundary phase.

### DETAILED DESCRIPTION OF THE PREFERRED EMBODIMENT

The present disclosure is further described below by way of Examples; however, the present disclosure is not limited to the scope of the described Examples. For the experimental methods in which no specific conditions are specified in the following Examples, selections are made according to conventional methods and conditions or according to the product instructions.

Table 1 Formula of raw material composition for the neodymium-iron-boron permanent magnet material and contents (wt.%)

| Nos. | Total R | RL | | RH | | Cu | Al | Co | B | M | | | Fe | B/R | Al/RH |
|---|---|---|---|---|---|---|---|---|---|---|---|---|---|---|---|
| | | Nd | PrNd | Tb | Dy | | | | | Nb | Zr | Ti | | | |
| Example 1 | 29 | 28.1 | / | 0.9 | / | 0.35 | 0.44 | 0.85 | 0.96 | 0.2 | / | / | 68.2 | 0.0331 | 0.489 |
| Example 2 | 31.8 | 31.3 | / | 0.5 | / | 0.55 | 0.95 | 1.5 | 1.05 | / | 0.2 | / | 63.95 | 0.033 | 1.9 |
| Example 3 | 29.5 | 29 | / | 0.1 | 0.4 | 0.4 | 0.5 | 0.9 | 1 | 0.25 | / | / | 67.45 | 0.0339 | 1 |
| Example 4 | 31 | 29.5 | / | 1.5 | / | 0.45 | 0.52 | 0.95 | 1.03 | / | / | 0.21 | 66.16 | 0.0332 | 0.133 |
| Example 5 | 31.5 | / | 30.7 | 0.8 | / | 0.5 | 0.85 | 1.2 | 1.04 | 0.21 | / | / | 64.7 | 0.033 | 1.06 |
| Example 6 | 29.2 | 28.3 | / | 0.9 | / | 0.42 | 0.7 | 1.3 | 1.05 | 0.23 | / | / | 67.1 | 0.036 | 0.78 |
| Comparative Example 1 | 33.5 | 32.6 | / | 0.9 | / | 0.5 | 0.85 | 1.2 | 1.08 | 0.2 | / | / | 62.67 | 0.0322 | 0.94 |
| Comparative Example 2 | 27 | 26.5 | / | / | 0.5 | 0.5 | 0.85 | 1.2 | 0.93 | 0.25 | / | / | 69.27 | 0.0344 | 1.7 |
| Comparative Example 3 | 31.5 | 31.1 | / | 0.4 | | 0.42 | 0.4 | 1.3 | 1.02 | 0.2 | / | / | 65.16 | 0.0323 | 1 |
| Comparative Example 4 | 29.1 | 28.9 | / | 0.2 | | 0.36 | 0.6 | 0.85 | 1.10 | 0.25 | / | / | 67.74 | 0.0378 | 3 |

Note: '/' refers to being free of the element.

**The preparation method for the neodymium-iron-boron permanent magnet materials in Examples 1-6 and Comparative Examples 1-4 was as follows:**
(1) Smelting process: according to the formula shown in Table 1, the prepared raw materials were placed in a crucible made of aluminum oxide, and vacuum smelting was carried out in a high-frequency vacuum induction smelting furnace in a vacuum of 5×10⁻² Pa at a temperature of 1500°C or lower.
(2) Casting process: the melt obtained from smelting was pour-casting at 1430°C, and casting was carried out after introducing Ar gas to make the gas pressure reach 55,000 Pa, then a quenched alloy was obtained at a cooling rate of 10²-10⁴ °C/sec, the alloy sheet has a thickness of 0.3 mm.
(3) Hydrogen-decrepitation-based pulverization process: A hydrogen decrepitation furnace, in which the quenched alloy was placed, was evacuated at room temperature, hydrogen with a purity of 99.9% was then introduced into the hydrogen decrepitation furnace, and the hydrogen pressure was maintained at 0.085 MPa; after full hydrogen absorption, the furnace was heated up while being evacuated, and full dehydrogenation was carried out at 500°C; after cooling, a powder pulverized by hydrogen decrepitation was taken out.
(4) Micro-pulverization process: The powder pulverized by hydrogen decrepitation was subjected to jet mill pulverization for 3 hours under the conditions of an oxidizing gas content of 100 ppm or less in a nitrogen atmosphere and a pulverization chamber pressure of 0.68 MPa to obtain a fine powder, the powder has a particle size of 4.2 µm. The oxidizing gas referred to oxygen or moisture.
(5) Lubricant was added to the powder resulting from jet mill pulverization in an amount of 0.12% relative to weight of powder after mixing, and then fully mixed by means of a V-type mixer.
(6) Magnetic field forming process: The powder described above, to which Lubricant had been added, was subjected to primary formation into a cube with a side length of 25 mm by means of a right-angle alignment magnetic field forming machine in a 1.8 T alignment magnetic field at a forming pressure of 0.35 ton/cm², and after the primary formation, the powder was demagnetized in a 0.2 T magnetic field. The formed body resulting from primary formation was sealed so that it did not come into contact with air, and secondary formation was then carried out at a pressure of 1.3 ton/cm² by means of a secondary formation machine (an isostatic pressing machine).
(7) Sintering process: each formed body was moved to a sintering furnace for sintering in a vacuum of 5×10⁻³ Pa and at a temperature of 1070°C for 6 hours, Ar gas was then introduced to make the gas pressure reach 0.05 MPa, and the formed body was then cooled to room temperature.
(8) Aging treatment process: the sintered body was aging treated for 3 hours in high-purity Ar gas at 510°C, then cooled to room temperature, and finally taken out to obtain the neodymium-iron-boron permanent magnet material.

### Effect Example

The neodymium-iron-boron permanent magnet materials prepared in Examples 1-6 and Comparative Examples 1-4 were separately taken to measure the magnetic performance and compositions thereof, and the phase compositions of the magnets thereof were observed by means of field emission electron probe microanalyzer (FE-EPMA).

(1) The compositions of the neodymium-iron-boron permanent magnet materials were measured using a high-frequency inductively coupled plasma optical emission spectrometer (ICP-OES), wherein an RHₓ-Al_{y}-RL_{z}-Cuₘ-Coₙ phase (x is 0.4-5.0, y is 0.5-1.1, z is 45-92, m is 0.5-3.5, n is 1.5-7) was obtained according to an FE-EPMA test. Table 2 below shows the composition test results, the SEM spectrum of the neodymium-iron-boron permanent magnet materials in Example 1 is shown in FIG. 1.

**Table 2 Composition of neodymium-iron-boron permanent magnet material and contents (wt.%)**

| Nos. | Tot al R | RL | | RH | | Cu | Al | Co | B | M | | | Fe | B/R | Al/ RH | Proportion of RH_{X}-Al_{y}-RL_{Z}-C uₘ-Coₙ phase in intergranular rare earth rich phase | RHₓ-Al_{y}-RL_{z}-Cuₘ-Coₙ |
|---|---|---|---|---|---|---|---|---|---|---|---|---|---|---|---|---|---|
| | | N d | Pr Nd | T b | D y | | | | | N b | Z r | Ti | | | | | |
| Example 1 | 29 | 28 .1 | / | 0. 9 | / | 0. 35 | 0. 44 | 0. 85 | 0. 96 | 0. 2 | / | / | 68. 2 | 0.03 31 | 0.48 9 | 5.8% | Tb_{3.7}-Al_{0.51}-Nd_{89.5}-Cu_{1.2} -Co_{4.6} |
| Example 2 | 31. 8 | 31 .3 | / | 0. 5 | / | 0. 55 | 0. 95 | 1. 5 | 1. 05 | / | 0. 2 | / | 63. 95 | 0.03 3 | 1.9 | 5.6% | Tb_{2.4}-Al_{1.04}-Nd_{90.2}-Cu_{1.5} -Co_{5.6} |
| Example 3 | 29. 5 | 29 | / | 0. 1 | 0. 4 | 0. 4 | 0. 5 | 0. 9 | 1 | 0. 25 | / | / | 67. 45 | 0.03 39 | 1 | 4.50% | Tb_{0.4}Dy_{2.5}-Al_{0.59}-Nd_{89.6}-Cu₁₄-Co_{5.1} |
| Example 4 | 31 | 29 .5 | / | 1. 5 | / | 0. 45 | 0. 52 | 0. 95 | 1. 03 | / | / | 0. 21 | 66. 16 | 0.03 32 | 0.13 3 | 5.40% | Tb_{4.5}-Al_{0.68}-Nd_{90.4}-Cu_{1.3} -Co_{5.2} |
| Example 5 | 31. 5 | / | 30. 7 | 0. 8 | / | 0. 5 | 0. 85 | 1. 2 | 1. 04 | 0. 21 | / | / | 64. 7 | 0.03 3 | 1.06 | 5.50% | Tb_{3.1}-Al_{0.98}-Nd_{67.3}Pr_{22.7-}Cu_{1.3}-Co_{5.1} |
| Example 6 | 29. 2 | 28 .3 | / | 0. 9 | / | 0. 42 | 0. 7 | 1. 3 | 1. 05 | 0. 23 | / | / | 67. 1 | 0.03 6 | 0.78 | 5.60% | Tb_{3.8}-Al_{0.77}-Nd_{89.2}-Cu_{1.2} -Co_{5.0} |
| Compar ative Example 1 | 33. 5 | 32 .6 | / | 0. 9 | / | 0. 5 | 0. 85 | 1. 2 | 1. 08 | 0. 2 | / | / | 62. 67 | 0.03 22 | 0.94 | No generation | / |
| Compar ative Example 2 | 27 | 26 .5 | / | / | 0. 5 | 0. 5 | 0. 85 | 1. 2 | 0. 93 | 0. 25 | / | / | 69. 27 | 0.03 44 | 1.7 | No generation | / |
| Compar ative Example 3 | 31. 5 | 31 .1 | / | 0. 4 | / | 0. 42 | 0. 4 | 1. 3 | 1. 02 | 0. 2 | / | / | 65. 16 | 0.03 23 | 1 | No generation | / |
| Compar ative | 29. 1 | 28 .9 | / | 0. 2 | / | 0. 36 | 0. 6 | 0. 85 | 1. 10 | 0. 25 | / | / | 67. 74 | 0.03 78 | 3 | No generation | / |
| Example 4 | | | | | | | | | | | | | | | | | |

In this table, the RHₓ-Al_{y}-RL_{z}-Cuₘ-Coₙ phase: x is 0.4-5.0, y is 0.5-1.1, z is 45-92, m is 0.5-3.5, n is 1.5-7; '/' referred to being free of the element.

(2) Magnetic performance evaluation: the sintered magnet material was tested for magnetic performance by NIM-10000H BH bulk rare earth permanent magnet nondestructive measurement system from The National Institute of Metrology of China, and the magnetic performance test results were as shown in Table 3 below. In Table 3, "Br" referred to remanence, "Hcj" referred to intrinsic coercivity, and "BHmax" referred to maximum energy product.

**Table 3 Performance of neodymium-iron-boron permanent magnet material**

| Nos. | Br(kGs) | Hcj(kOe) | BHmax (MGOe) | Bending strength (Mpa) |
|---|---|---|---|---|
| Example 1 | 14.28 | 19.59 | 49.50 | 412 |
| Example 2 | 13.12 | 22.13 | 41.38 | 436 |
| Example 3 | 14.11 | 17.83 | 47.80 | 416 |
| Example 4 | 13.80 | 22.05 | 45.34 | 451 |
| Example 5 | 13.18 | 24.36 | 41.76 | 423 |
| Example 6 | 13.87 | 21.16 | 45.37 | 409 |
| Comparative Example 1 | 12.74 | 21.85 | 39.41 | 356 |
| Comparative Example 2 | 14.35 | 16.32 | 48.11 | 312 |
| Comparative Example 3 | 13.75 | 16.60 | 45.44 | 338 |
| Comparative Example 4 | 14.03 | 15.47 | 46.86 | 329 |

As can be seen from Table 3:
1) The neodymium-iron-boron permanent magnet material of the present disclosure has both excellent magnetic performance and mechanical performance: Br≥13.12kGs, Hcj≥17.83kOe,BHmax≥41.38MGOe, bending strength ≥ 409MPa (Example 1-6);
2) Based on the formula of the present disclosure, even if the contents of R, B and Al are adjusted, as long as B/R and Al/RH are not simultaneously within the range defined in this application, RHₓ-Al_{y}-RL_{z}-Cuₘ-Coₙ phase (x is 0.4-5.0, y is 0.5-1.1, z is 45-92, m is 0.5-3.5, n is 1.5-7) cannot be generated. Thus, the Br and Hcj cannot be both maintained at higher values, and the bending strength decreased significantly (Comparative Example 1-3);
3) Based on the formula of the present disclosure, even if the values of B/R and Al/RH are adjusted but not simultaneously within the range defined in this application, both the Hcj and bending strength of the neodymium-iron-boron permanent magnet material decreased significantly (Comparative Example 4).

## Claims

1. A neodymium-iron-boron permanent magnet material, wherein the neodymium-iron-boron permanent magnet material comprises R, Al, Cu and Co;
R comprises RL and RH;
RL comprises one or more light rare earth elements of Nd, La, Ce, Pr, Pm, Sm and Eu;
RH comprises one or more heavy rare earth elements of Tb, Gd, Dy, Ho, Er, Tm, Yb, Lu and Sc;
the neodymium-iron-boron permanent magnet material satisfies the following relationship:
(1) B/R: 0.033-0.037;
(2) Al/RH: 0.12-2.7.

2. The neodymium-iron-boron permanent magnet material according to claim 1, wherein, RH/R: 0-0.11 and exclusive of 0;
and/or, B/R has a weight ratio of 0.034-0.036 or 0.033-0.034, such as 0.0331, 0.033, 0.0339, 0.0332, 0.033 or 0.036;
and/or, Al/RH has a weight ratio of 0.35-1.25 or 0.12-2, such as 0.489, 1.9, 1, 0.133, 1.06 or 0.78;
and/or, RL comprises one or more of Nd, Pr and Ce;
and/or, RH comprises Dy and/or Tb.

3. The neodymium-iron-boron permanent magnet material according to claim 1 or 2, wherein the neodymium-iron-boron permanent magnet material comprises a NdFeB main phase and an intergranular rare earth rich phase, the intergranular rare earth rich phase comprises RHₓ-Al_{y}-RL_{z}-Cuₘ-Coₙ phase, x is 0.4-5.0, y is 0.5-1.1, z is 45-92, m is 0.5-3.5, n is 1.5-7;
preferably, the volume ratio of the RHₓ-Al_{y}-RL_{z}-Cuₘ-Coₙ phase to the intergranular rare earth rich phase is 4-10%, more preferably 4.5-6%, such as 5.8%, 5.6%, 4.5%, 5.4%, 5.5% or 5.6%.

4. A neodymium-iron-boron permanent magnet material, wherein the neodymium-iron-boron permanent magnet material comprises a NdFeB main phase and an intergranular rare earth rich phase, the intergranular rare earth rich phase comprises RHₓ-Al_{y}-RL_{z}-Cuₘ-Coₙ phase, x is 0.4-5.0, y is 0.5-1.1, z is 45-92, m is 0.5-3.5, n is 1.5 -7;
RL and RH have features as described in claim 1;
preferably, the volume ratio of the RHₓ-Al_{y}-RL_{z}-Cuₘ-Coₙ phase to the intergranular rare earth rich phase is 4-10%, more preferably 4.5-6%, such as 5.8%, 5.6%, 4.5%, 5.4%, 5.5% or 5.6%.

5. The neodymium-iron-boron permanent magnet material according to any one of claims 1-4, wherein the neodymium-iron-boron permanent magnet material comprises, by mass percentage:
R: 28-33 wt.%;
RH: 0.5-2.5 wt.%;
Cu: 0.35-0.55 wt.%;
Al: 0.44-0.95 wt.%;
Co: 0.85-1.5 wt.%;
B: 0.955-1.05 wt.%;
Fe: 66-69 wt.%;
R comprises RL and RH;
wt.% refers to the mass percentage relative to the neodymium-iron-boron permanent magnet material.

6. The neodymium-iron-boron permanent magnet material according to claim 5, wherein R has a range of content of 28-31 wt.% or 29-33 wt.%, such as 29 wt.%, 31.8 wt.%, 29.5 wt.%, 31 wt.%, 31.5 wt.% or 29.2 wt.%, wt.% refers to the mass percentage relative to the neodymium-iron-boron permanent magnet material;
and/or, RH has a range of content of 0.5-1.5 wt.% or 0.9-2.5 wt.%, such as 0.9 wt.%, 0.5 wt.%, 1.5 wt.% or 0.8 wt.%, wt.% refers to the mass percentage relative to the neodymium-iron-boron permanent magnet material;
and/or, Cu has a range of content of 0.35-0.5 wt.% or 0.4-0.55 wt.%, such as 0.35 wt.%, 0.55 wt.%, 0.4 wt.%, 0.45 wt.%, 0.5 wt.% or 0.42 wt.%, wt.% refers to the mass percentage relative to the neodymium-iron-boron permanent magnet material;
and/or, Al has a range of content of 0.44-0.85 wt.% or 0.5-0.95 wt.%, such as 0.44 wt.%, 0.95 wt.%, 0.5 wt.%, 0.85 wt.% or 0.7 wt.%, wt.% refers to the mass percentage relative to the neodymium-iron-boron permanent magnet material;
and/or, Co has a range of content of 0.85-1.3 wt.% or 0.95-1.5 wt.%, such as 0.85 wt.%, 1.5 wt.%, 0.9 wt.%, 0.95 wt.%, 1.2 wt.% or 1.3 wt.%, wt.% refers to the mass percentage relative to the neodymium-iron-boron permanent magnet material;
and/or, B has a range of content of 0.955-1.03 wt.% or 1-1.05 wt.%, such as 0.96 wt.%, 1.05 wt.%, 1 wt.%, 1.03 wt.% or 1.04 wt.%, wt.% refers to the mass percentage relative to the neodymium-iron-boron permanent magnet material;
and/or, the neodymium-iron-boron permanent magnet material further comprises M, which comprises one or more of Nb, Zr, Ti and Hf; preferably, M has a range of content of 0.1-0.4 wt.%, more preferably, 0.15-0.25 wt.%, wt.% refers to the mass percentage relative to the neodymium-iron-boron permanent magnet material;
when M comprises Nb, Nb has a range of content of preferably 0-0.5 wt.%, such as 0.2 wt.%, 0.21 wt.%, 0.23 or 0.25 wt.%, wt.% refers to the mass percentage relative to the neodymium-iron-boron permanent magnet material;
when M comprises Zr, Zr has a range of content of preferably 0-0.3 wt.%, such as 0.2 wt.%, wt.% refers to the mass percentage relative to the neodymium-iron-boron permanent magnet material;
when M comprises Ti, Ti has a range of content of preferably 0-0.3 wt.%, such as 0.21 wt.%, wt.% refers to the mass percentage relative to the neodymium-iron-boron permanent magnet material.

7. A preparation method for a neodymium-iron-boron permanent magnet material, comprising the following steps: subjecting a melt of a raw material composition for the neodymium-iron-boron permanent magnet material to casting, coarse crushing, pulverization, forming and sintering;
the raw material composition for the neodymium-iron-boron permanent magnet material comprises R, Al, Cu and Co;
R comprises RL and RH; RL and RH have features as described in claim 1;
the raw material composition for the neodymium-iron-boron permanent magnet material satisfies the following relationship:
(1) B/R: 0.033-0.037.
(2) Al/RH: 0.12-2.7.

8. The preparation method according to claim 7, wherein the raw material composition for the neodymium-iron-boron permanent magnet material comprises, by mass percentage: R: 28-33 wt.%; RH: 0.5-2.5 wt.%; Cu: 0.35-0.55 wt.%; Al: 0.44-0.95 wt.%; Co: 0.85-1.5 wt.%; B. 0.955-1.05 wt.%; the balance is Fe and inevitable impurities; R comprises RL and RH; wt.% refers to the mass percentage relative to the raw material composition for the neodymium-iron-boron permanent magnet material;
and/or, the process of the casting comprises pour-casting, the pour-casting has a temperature of 1420-1460°C, preferably 1425-1455°C, such as 1430°C;
and/or, an alloy sheet is obtained after the casting, the alloy sheet has a thickness of 0.28-0.32 mm, such as 0.3 mm;
and/or, a powder obtained after the pulverization has a particle size of 4.1-4.4 µm, preferably 4.1-4.3 µm, such as 4.2 µm;
and/or, the sintering has a temperature of 1000-1100°C, such as 1070°C;
and/or, the sintering is further followed by an aging treatment; preferably, the aging treatment has a temperature of 490-530°C, preferably 500-520°C, such as 510°C; the aging treatment has a time of preferably 2.5-4 hours, such as 3h.

9. A neodymium-iron-boron permanent magnet material prepared by the preparation method according to claim 7 or 8.

10. A use of the neodymium-iron-boron permanent magnet material according to any one of claims 1-6 and 9 as an electronic component in an electric device.
